Europäisches Patentamt

European Patent Office

Office européen des brevets

(19)

(11)    EP 0 768 178 B1

(12)    EUROPÄISCHE PATENTSCHRIFT

(45) Veröffentlichungstag und Bekanntmachung des
Hinweises auf die Patenterteilung:
03.02.1999  Patentblatt 1999/05

(51) Int. Cl.⁶: $B41F\ 33/00$, $B41F\ 31/04$

(21) Anmeldenummer: 96113721.3

(22) Anmeldetag: 28.08.1996

(54) **Verfahren zum Feststellen von Schichten auf metallischen Oberflächen in Druckmaschinen**

Process for detecting layers on metallic surfaces in printing machines

Procédé de détection des couches sur des surfaces métalliques dans des machines à imprimer

(84) Benannte Vertragsstaaten:
AT CH DE FR GB IT LI NL SE

(30) Priorität: 11.10.1995 DE 19537807

(43) Veröffentlichungstag der Anmeldung:
16.04.1997  Patentblatt 1997/16

(73) Patentinhaber:
MAN Roland Druckmaschinen AG
63075 Offenbach (DE)

(72) Erfinder:
• **Lippold, Andreas**
**61130 Nidderau (DE)**
• **Schlegel, Christian**
**63128 Dietzenbach (DE)**

(74) Vertreter: **Stahl, Dietmar**
**MAN Roland Druckmaschinen AG,**
**Abteilung FTB/S,**
**Postfach 101264**
**63012 Offenbach (DE)**

(56) Entgegenhaltungen:
DE-A- 2 651 003          US-A- 4 129 781

## Beschreibung

Die Erfindung betrifft ein Verfahren zum Feststellen von Farb- oder Lackschichten innerhalb von Druckmaschinen sowie entsprechende Vorrichtung zur Durchführung des Verfahrens gemäß dem Oberbegriff des Verfahrens- bzw. Vorrichtungsanspruches.

Bei Bogenoffsetdruckmaschinen wird die zuzuführende Farbe von einem mit einer Farbkastenwalze zusammenwirkenden Farbkasten über die Walzen des Farbwerkes einer Druckform zugeführt. Entsprechend den Farbbedürfnissen der Druckform erfolgt zonal eine unterschiedliche Farbdschichtdickeneinstellung aufder Oberfläche der Farbkastenwalze. Die zonale Einstellung der Farbschichtdicken erfolgt dabei durch geteilte oder ungeteilte Farbmesser bzw. durch Farbdosierelemente. Insbesondere die Farbdosierelemente sind durch Stellmotore und integrierte Lagegeber fernverstellbar ausgerüstet, so daß eine Einstellung der Farbzufuhr von einem Bedienpult oder Leitstand der Druckmaschine erfolgen kann.

Damit die Signale des Stellungsgebers eines Farodosierelementes auf die an der Farbkastenwalzenoberfläche einzustellenden Schichtdicke kalibriert werden kann, ist es erforderlich, daß die Nullstellung des Farodosierelementes, also diejenige Stellung, bei welcher dieses an der Oberfläche der Farbkastenwalze anliegt, erfaßt wird. In der Regel erfolgt bei Farbdosieranlagen von Zeit zu Zeit ein Stellen der Farbdosierelemente von Hand auf Null-Farbauftrag. Die Signale der Stellungsgeber der auf Null-Farbauftrag gestellten Farbdosierelemente werden als Nullstellungswerte abgespeichert und für künftige Positioniervorgänge der Farodosierelemente gewertet. Wegen der Vielzahl von Farodosierelementen, insbesondere bei Mehrfarben-Bogenoffsetdruckmaschinen gestaltet sich ein derartiges Vorgehen aber sehr zeitaufwendig.

Aus der DE 3 331 208 C2 ist ein Verfahren zum Einstellen von Farodosierelementen eines Farbwerkes einer Druckmaschine mit entsprechender Meßvorrichtung bekannt, bei welchem die zonal auf einer Farbkastenwalze eingestellte Farbschichtdicke mittels einem traversierenden Densitometer erfaßt wird. Insbesondere kann mit der vorgeschlagenen Meßvorrichtung die sogenannte Null-Stellung der Farbdosierelemente gegenüber der Farbkastenwalze bestimmt werden. Nachteilig bei diesem vorbekannten Meßprinzip ist aber, daß ein traversierendes Densitometer notwendig ist. Ferner ist es als nachteilig anzusehen, daß sowohl die auf der Farbkastenwalze befindliche frische Farbe als auch die Oberfläche der Farbkastenwalze Glanzeffekte zeigen, was die Bestimmung der Null-Stellung besonders erschwert. Auch ist es als nachteilig anzusehen, daß ein derartiges Vorgehen das Vorhandensein einer farbfreien Duktoroberfläche als Eichbereich notwendig macht, welche keine Verunreinigungen oder Verschmutzungen aufweisen darf.

Densitometer wie sie in der Druckindustrie bereits seit einiger Zeit eingesetzt werden, weisen in der Regel eine Null/45- bzw. 45/Null-Grad-Geometrie auf. Dies bedeutet, daß das Meßfeld entweder senkrecht oder in einem 45-Grad-Winkel beleuchtet und das von dem Meßfeld unter entweder 45-Grad oder senkrecht reflektierte Licht einem fotoelektrischen Wandler zugeführt wird. Auch ist es bei den hier angesprochenen Densitometern seit einiger Zeit bekannt, Polarisationsfilter in den optischen Strahlengang anzuordnen. Durch diese Polarisationsfilter werden durch frische Druckfarbe verursachte Fehlmessungen vermieden.

Aus der DE-A 2 651 003 ist ein Verfahren sowie eine Vorrichtung zur Farbschichtdickenbestimmung bekannt, bei der das Bestrahlen und das Erfassen der von der Farbschicht reflektierten Lichtes unter dem Brewster-Winkel erfolgt. Durch Polarisatoren wird erreicht, daß das von der Farbschichtoberfläche reflektierte Licht von einem Detektor nicht erfaßbar ist, diesem also nur das durch die Farbschichtdicke zweimal hindurchtretende Licht zugeführt wird. Mit diesem Verfahren und der entsprechenden Vorrichtung lassen sich Farbschichtdicken zwischen 0 und $100\mu$, vorzugsweise zwischen 15 und $35\mu$ bestimmen.

Aus der US-A 4,129,781 ist ein allgemeines Schichtdickenmeßverfahren sowie eine entsprechende Vorrichtung bekannt, bei der ebenfalls die Beleuchtung sowie die Erfassung der reflektierten Strahlung unter dem Brewster-Winkel erfolgt.

Aufgabe der vorliegenden Erfindung ist es daher, ein Verfahren sowie eine entsprechende Vorrichtung zur Durchführung des Verfahrens gemäß dem Oberbegriff des jeweiligen Verfahrens- bzw. Vorrichtungsanspruches derartig zu erweitern, so daß der mittels einem Dosierelement eingestellte Null-Farb- bzw. Null-Lackauftrag auf einer sich drehenden Walze mit hoher Genauigkeit feststellbar ist.

Gelöst wird diese Aufgabe durch die kennzeichnenden Merkmale des Verfahrens- bzw. Vorrichtungsanspruches. Weiterbildungen der Erfindung ergeben sich aus den Unteransprüchen.

Erfindungsgemäß ist vorgesehen, daß der Oberflächenbereich der Walze bzw. allgemein der metallischen Fläche, aufwelcher das Vorhandensein bzw. nicht Vorhandensein einer Schicht festzustellen ist, mit Licht unter dem sogenannten Brewster-Winkel gegenüber der Flächennormal bestrahlt wird und unter ebenfalls diesem Winkel das von der Oberfläche der festzustellenden Schicht bzw. der Walzenoberfläche reflektierte Licht quantitativ erfaßt wird. Im Strahlengang der Beleuchtung des Oberflächenbereiches und/oder im Strahlengang, durch welches das reflektierte Licht einem fotoelektrischen Wandler zugeführt wird, befindet sich ein Polarisator, durch welchen das Licht wenigstens teilweise in der Einfallsebene der beschriebenen optischen Anordnung polarisiert wird. Der Brewster-Winkel, unter welchem die Einstrahlung als auch die Aufnahme des reflektierten Lichtes erfolgt, richtet sich dabei nach den optisch brechenden Eigenschaften des Materials der Farbe bzw. des Lackes. Weist die auf der Oberfläche der Walze befindliche Farbe bzw. der Lack den optischen Brechungsindex n auf, so gilt für den Brewster-Winkel β die allgemein bekannte Beziehung: $\tan \beta = n$ .

Durch das erfindungsgemäße Verfahren sowie die entsprechend ausgebildeten Meßvorrichtungen ist es möglich, eine Vielzahl von unterschiedlich farbigen Druckfarben aber auch transparenten Lacken oder sonstigen Fluiden auf metallischen Oberflächen festzustellen. Da sich wegen der Einfachheit des Meßverfahrens gerade der apparative Aufwand sehr kostengünstig darstellt, ist eine zonenweise Feststellung des Farbauftrages, d.h. ob ein entsprechendes Farbdosierelement die Farbe bzw. den Lack vollständig von der Duktoroberfläche abrakelt, in einfacher Weise möglich. Bei einer mit einem Farbkasten zusammenwirkenden Farbkastenwalze wird dazu in jeder Farbdosierzone eine erfindungsgemäße Meßvorrichtung an einer parallel zur Farbkastenwalze verlaufenden Traverse angeordnet. Die einzelnen Farbdosierelemente werden dann durch die zugeordneten fernsteuerbaren Antriebe in Richtung Farbkastenwalze bewegt und durch eine Auswerteschaltung die entsprechenden Signale der fotoelektrischen Wandler ausgewertet. Durch sowohl Bestrahlung als auch Empfang des reflektierten Lichtes der Oberfläche der Farbkastenwalze in Verbindung mit der zumindest teilweisen Polarisation des Lichtes in der Einfallsebene ergibt sich eine große Signalveränderung (Signalsprung), wenn die Farb- oder Lackschicht vollständig von der Farbkastenwalzenoberfläche abgerakelt ist, diese Oberfläche also blank läuft.

Des weiteren erfolgt die Erläuterung des erfindungsgemäßen Meßverfahrens sowie einer entsprechenden Vorrichtung anhand der Zeichnungen. Es zeigt:

Fig. 1    prinzipiell den optischen Aufbau,
Fig. 2    eine Auswerteschaltung,
Fig. 3    eine Meßvorrichtung,
Fig. 4    eine Meßvorrichtung für eine Farbkastenwalze mit mehreren Farbdosierzonen.

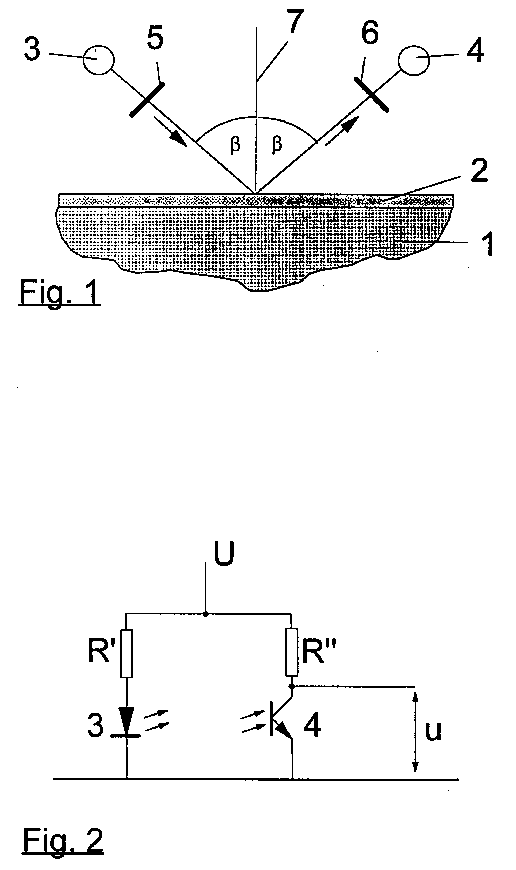

Fig. 1 zeigt einen Ausschnitt der Oberfläche einer beispielsweise als Farbkastenwalze ausgebildeten metallischen Walze 1. Auf der Oberfläche dieser Walze 1 befindet sich eine durch das erfindungsgemäß vorgesehene Verfahren sowie die entsprechende Meßvorrichtung festzustellende Schicht 2 eines Lackes bzw. einer Farbe. Das Material der Schicht 2 weist dabei einen bekannten Brechungsindex n auf Die Oberfläche der Walze 1 sowie der darauf befindlichen Schicht 2 wird unter den Brewster-Winkel β ($\tan \beta = n$) gegenüber der Flächennormalen 7 von einer insbesondere als LED ausgebildeten Lichtquelle 3 bestrahlt.

Das von der Oberfläche der Walze 1 bzw. der darauf befindlichen Schicht 2 reflektierte Licht wird dabei ebenfalls unter dem Brewster-Winkel β von einem insbesondere als Fototransistor ausgebildeten Lichtempfänger 4 bzw. lichtelektrischen Wandler empfangen. In den Strahlengängen vorzusehende Blenden sind nicht wiedergegeben. Bei der Darstellung gemäß Fig. 1 ist die Einfallsebene durch die Zeichnungsebene definiert.

Im Strahlengang zur Beleuchtung der Oberfläche der Walze 1 bzw. der darauf befindlichen Schicht 2 und/oder im Strahlengang zum Empfang des von der Oberfläche der Walze 1 bzw. der darauf befindlichen Schicht 2 reflektierten Lichtes sind bzw. ist ein Polarisationsfilter 5, 6 angeordnet, wobei durch das oder die Polarisationsfilter 5, 6 eine Polarisation des Lichtes in der Einfallsebene dargestellten Anordnung erfolgt. Es sei an dieser Stelle hervorgehoben, daß es ausreichend sein kann, entweder im Beleuchtungstrahlengang dem Lichtsender 3 ein Polarisationsfilter 5 nachzuordnen oder im Strahlengang zum Empfang des reflektierten Lichtes dem als Fototransistor ausgebildeten Lichtempfänger 4 ein entsprechendes Polarisationsfilter 6 vorzuordnen. Wesentlich ist lediglich, daß durch die einen oder beiden Polarisationsfilter 5, 6 zumindest eine teilweise Polarisation des Lichtes in der Einfallsebene erfolgt, so daß die elektrischen Feldstärke-Vektoren in der durch den Einfalls-und Reflektionsstrahl gebildeten Zeichnenebene liegen.

Solange die Dicke der Schicht 2 auf der Walze 1 von Null verschieden ist, dringt ein Teil des von dem Lichtsender 3 auf die Schicht 2 gestrahlten Lichtes in die Schicht 2 unter Ablenkung von der Einstrahlungsrichtung ein. An der Oberfläche der Schicht 2 erfolgt entsprechend eine Reflektion ebenfalls unter dem Brewster-Winkel. Da der in die Schicht 2 eindringende Strahl senkrecht auf der von der Oberfläche der Schicht 2 reflektierten Lichtstrahl steht, weist dieser reflektierte Lichtstrahl lediglich eine Polarisation senkrecht zur Einfallsebene auf Mit anderen Worten bedeutet dies, daß, solange die Dicke der Schicht 2 auf der Oberfläche der Walze 1 von Null verschieden ist, die Schicht 2 bei der erfindungsgemäß vorgesehenen Beleuchtungs- und Lichtempfangsgeometrie lediglich Licht zu reflektieren vermag, welches eine Polarisationsebene senkrecht zur Einfallsebene aufweist. Je nachdem, ob im Beleuchtungs- und/oder Empfangsstrahlengang Polarisationsfilter 5, 6 angeordnet sind, ergeben sich die nachfolgend beschriebenen beiden Fälle.

Befindet sich lediglich im Beleuchtungsstrahlengang dem Lichtsender 3 nachgeordnet ein Polarisationsfilter, durch welches das Licht des Lichtsenders 3 in der Einfallsebene polarisiert wird, so kann bei einer von Null verschiedenen Dicke der Schicht 2 auf der Walze 1 der Lichtempfänger 4 kein Licht empfangen. Dies hat seine Ursache darin, daß durch die Polarisation des Lichtes vom Lichtsender 3 durch das Polarisationsfilter 5 die Oberfläche der Schicht 2 mit dem in der Einfallsebene polarisierten Licht bestrahlt wird und die Oberfläche der Schicht 2 aber lediglich senkrecht zur Einfallsebene polarisiertes Licht zu reflektieren vermag.

Erst wenn durch Anstellen eines hier nicht dargestelltes Farbdosierelementes oder eines sonstiges Rakels die Dicke der Schicht 2 auf Null abgenommen hat, also die Oberfläche der Walze 1 blank ist, erfolgt eine Reflektion des durch das Polfilter 5 polarisierten Lichtes an der metallischen Oberfläche der Walze 1. Dem Lichtempfänger ist dann ein Signal entnehmbar. Solange die Dicke der Schicht 2 auf der Walze 1 jedoch von Null verschieden ist, ist dem Lichtempfänger 4 kein durch Bestrahlung hervorgerufenes Signal entnehmbar bzw. das empfangene Signal ist um zumindest Größenordnungen geringer als im Falle der blanken Oberfläche der Walze 1.

Befindet sich lediglich im Empfangsstrahlengang dem Lichtempfänger 4 ein Polarisationsfilter 6 vorgeordnet, so ergibt sich die Funktionsweise des zuvor beschriebenen Meßprinzips in analoger Weise. Durch den Lichtsender 3 erfolgt die Bestrahlung der Oberfläche der Schicht 2 auf der Walze 1. Solange die Dicke der Schicht 2 von Null verschieden ist, erfolgt aufgrund der Bestrahlung der Oberfläche der Schicht 2 unter dem Brewster-Winkel eine Reflektion des Lichtes, wobei das reflektierte Licht senkrecht zur Einfallsebene polarisiert ist. Da das Polarisationsfilter 6 vor dem Lichtempfänger 4 die Lichtanteile mit einer Polarisationsebene in der Einfallsebene durchläßt, gelangt auf den Lichtempfänger 4 wenn überhaupt nur eine geringe Lichtmenge. Entsprechend bleibt bei einer von Null verschiedenen Dicke der Schicht 2 das dem Lichtempfänger 4 entnehmbare Signal gering. Erst wenn ein nicht dargestelltes Farbdosierelement bzw. Rakel die Schicht 2 auf der Walze vollständig abgerakelt hat, d.h. also nur noch die metallische Oberfläche der Walze 1 das einfallende Licht reflektiert, vermag der Lichtempfänger 4 Licht zu empfangen und dementsprechend ein Signal abzugeben. Dies hat seine Ursache wiederum darin, daß die metallische Oberfläche der Walze 1 das Licht unabhängig von einer evtl. vorliegenden Polarisationsrichtung reflektiert.

In den zuvor stehend beschriebenen Fällen war das Polarisationsfilter 5, 6 entweder im Beleuchtungs-bzw. Empfangsstrahlengang angeordnet. Selbstverständlich ist es auch möglich, daß jedweils ein Polarisationsfilter 5, 6 sowohl im Beleuchtungs- als auch im Empfangsstrahlengang dem Lichtsender 3 nach- sowie dem Lichtempfänger 4 vorgeordnet ist. Wesentlich ist dabei, daß durch die Polarisationsfilter 5, 6 eine Polarisation des Lichtes in der durch die Einfallsebene definierten Richtung erfolgt. Ferner müssen der oder die Polarisationsfilter 5, 6 auch keine 100%ige Polarisation des Lichtes der Bestrahlung bzw. des empfangenen Lichtes vornehmen. Je höher der Polarisationsgrad der verwendeten Filter jedoch ist, desto besser eignet er sich das erfindungsgemäße Meßverfahren auch für Farb-und Lackschichten, welche eine hohe Transparenz aufweisen bzw. nahezu vollständig durchsichtig sind. Dies hat seinen Grund darin, daß es nicht nur an der Oberfläche der Schicht 2 zu einer Reflektion bzw. zu einer Reflektion mit gleichzeitiger Polarisation kommt, sondern zusätzlich auch daß das in die Schicht 2 eindringende Licht an der Grenzschicht zwischen Schicht 2 und Walze 1 reflektiert wird.

Fig. 2 zeigt prinzipiell eine Schaltung der erfindungsgemäßen Meßvorrichtung. Der als Leuchtdiode (LED) ausgebildete Lichtsender 3 ist in Reihe mit einem Widerstand R' geschaltet. Auf der Empfängerseite ist ebenfalls der als Fototransistor ausgebildete Lichtempfänger 4 in Reihe mit einem Widerstrand R" geschaltet. Zwei Anschlüsse des Lichtempfängers 4 sowie des Lichtsenders 3 sind miteinander verbunden und liegen auf gleichem Potential. Über eine gemeinsame Versorgungsspannung U werden Lichtsender 3 und Lichtempfänger 4 über die Widerstände R', R" bestromt. Der Abgriff der der vom Lichtempfänger 4 empfangenen Stahlung entsprechenden Signalspannung u erfolgt zwischen dem Widerstand R" und dem Anschluß des Lichtempfänges 4.

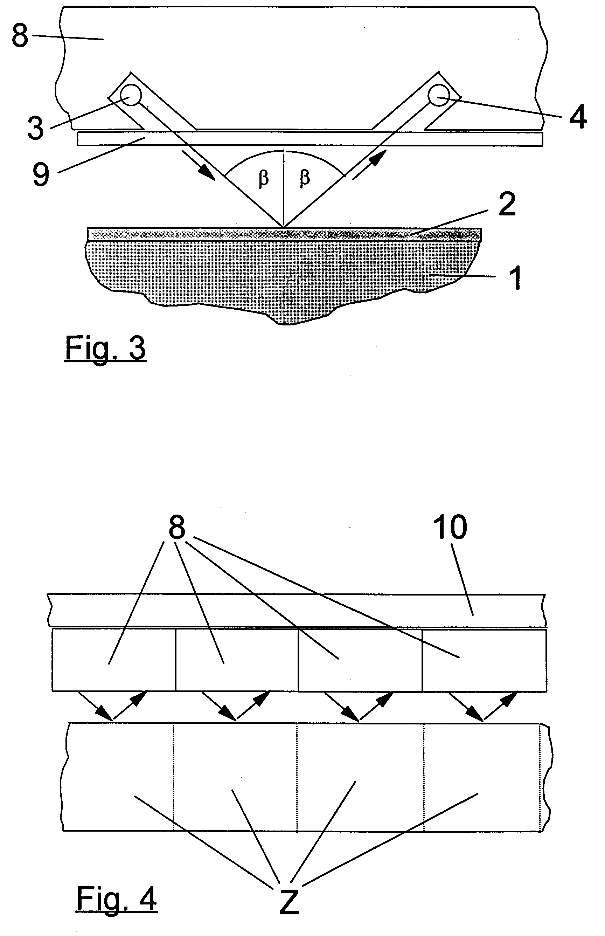

Fig. 3 zeigt eine kompakte Ausführungsform der erfindungsgemäßen Meßvorrichtung. Die Leuchtdiode (LED) des Lichtsenders 3 sowie der Lichtempfänger 4 in Form des Fototransistors sind dabei in einem Winkel zueinander verlaufenden Kanälen eines Gehäuses 8 angeordnet. Die Kanäle in dem Gehäuse 8, in welchem die Lichtsender 3 sowie der Lichtempfänger 4 eingelassen sind, schneiden sich dabei in einem Winkel entsprechend der vorgesehenen Meßgeometrie, also dem zweifachen Wert des durch das Material der Schicht 2 bestimmten Brewster-Winkels β. Die Unterseite des Gehäuses 8 ist mit einer Glasplatte 9 abgeschlossen, so daß durch diese das vom Lichtsender 3 ausgestrahlte und das von der Oberfläche der Schicht 2 auf der Walze 1 reflektierte Licht durch die Glasplatte 9 vom Lichtempfänger 4 empfangen wird. Zusätzliche Einrichtungen zur Polarisation müssen dabei nicht vorgesehen sein, da hier durch die Glasplatte 9 sowohl die Polarisation des vom Lichtsender 3 ausgestrahlten als auch des von der Schicht 2 bzw. der blanken Walze 1 reflektierten und vom Fotoempfänger 4 erfassten Lichtes erfolgt. Der Anteil des durch die Glasplatte 9 in der Einfallsebene polarisierten Lichtes hängt dabei von dem Winkel ab, unter weichem dieses durch die Glasplatte 9 gestrahlt wird. Weist das Glas einen Brechungsindex n auf, der gleich dem Brechungsindex des Material der Schicht 2 auf der Walze 1 ist, so gelangt lediglich in der Einfallsebene polarisiertes Licht durch die Glasplatte 9.

Fig. 4 zeigt eine als Farbkastenwalze ausgebildete Walze 1 mit einer Anzahl von Dosierzonen Z. In den einzelnen Zonen Z erfolgt auf der Walze 1 durch nicht dargestellte Farbdosierelemente in Form von Farbschiebern, Dosierexzentern, Farbmessern oder sonstigen Rakelelementen das Einstellen einer hier nicht dargestellten Schichtdicke. Die den einzelnen Zonen Z zugeordneten Farbdosierelemente sind dabei durch Stellantriebe fernansteuerbar. Insbesondere weisen die Farbdosierelemente Stellungsgeber auf, aus deren Signal jeweils die Stellung des Farbdosierelementes bezüglich der Oberfläche der Walze 1 und somit auch aus der eingestellten Schichtdicke entnehmbar ist. Die einzelnen Gehäuse 8 je einer Meßvorrichtung sind an einer sich parallel zur Achse der Walze 1 erstreckenden Traverse 10 angebracht. Die erfindungsmäßen Meßvorrichtungen liegen somit in einer Ebene, in welcher auch die Achse der Walze 1 liegt. Die zur Oberfläche der Walze 1 gerichteten Unterseiten der Gehäuse 8 sind dabei, wie anhand der Fig. 3 beschrieben, mit einer hier nicht dargestellten Glasplatte abgeschlossen. Diese kann bei evtl. Verschmutzung gereinigt werden. Ferner ist vorgesehen, daß die in Fig. 4 skizzierte Anordnung zusätzlich noch durch eine Abdeckung in Form eines Profiles oder dgl. gegen mechanische Beschädigung geschützt ist.

Zum Abspeichern der einzelenen Nullstellungswerte der Farbdosierelemente werden nun sämtliche Farbdosierelemente von der Walze 1 weggefahren, so daß mit Sicherheit eine von Null verschiedene Schicht auf der Walze 1 existiert. Nun wird nach und nach jeweils ein Farbdosierelement in Richtung Walze 1 verfahren, bis durch die erfindungsgemäße Meßvorrichtung in der jeweiligen Zone Z ein Ansteigen des vom Lichtempfänger 4 empfangenen Lichtes feststellbar ist, was seinen Grund darin hat, daß nun die vollständig abgerakelte Oberfläche der Walze 1 das Licht ungeachtet dessen Polarisationsebene reflektiert. Die von dem Stellungsgeber des Dosierelementes abgegriffene elektrische Spannung bzw. dessen Signal wird abgespeichert und ist somit für künftige Dosiervorgänge verwendbar. Daraufhin wird das entsprechende Farodosierelement wieder von der Walze 1 weggefahren und der Vorgang für ein nächstes Farbdosierelement wiederholt.

## Bezugszeichenliste

| | |
|---|---|
| 1 | Walze |
| 2 | Schicht (Farbe, Lack) |
| 3 | Lichtsender (Leuchtdiode) |
| 4 | Lichtempfänger (Fototransistor) |
| 5 | Polarisationsfilter |
| 6 | Polarisationsfilter |
| 7 | Flächennormale |
| 8 | Gehäuse |
| 9 | Glasplatte |
| $\beta$ | Brewster-Winkel |
| n | Brechungsindex (Schicht 2) |
| R', R'' | Widerstand |
| U | Versorgungsspannung |
| u | Signalspannung (Lichtempfänger 4) |

## Patentansprüche

1. Verfahren zum Einstellen eines Dosierelementes gegenüber einer drehenden Walze einer Druckmaschine, wobei mittels dem Dosierelement auf der metallischen Walze eine Schicht aus Farbe, Lack oder dgl. erzeugt wird und das Dosierelement einen Stellungsgeber aufweist, aus dessen Signal jeweils die Stellung des Dosierelements bzgl. der Oberfläche der Walze und somit die eingestellte Schichtdicke entnehmbar ist,
**dadurch gekennzeichnet,**

daß zur Bestimmung der Stellung, in welcher das Dosierelement ganz an der Walze anliegt, die Schicht auf der Walze mit Licht bestrahlt und das von der Schicht reflektierte Licht erfaßt und die Intensität des reflektierten Lichtes ermittelt wird, wobei das Bestrahlen der Oberfläche bzw. der darauf befindlichen Schicht sowie das Empfangen des von der Oberfäche bzw. der darauf befindlichen Schicht reflektierenden Lichtes unter dem Brewster-Winkel gegenüber der Flächennormalen erfolgt, wobei der Brewster-Winkel durch den Brechungsindex des Materials der zu bestimmenden Schicht definiert ist,
wenigstens in einem der beiden Strahlengänge eine wenigstens teilweise lineare Polarisation des Lichtes in der Einfallsebene erfolgt,
während des Verfahrens des Dosierelementes in Richtung Walze die Intensität der reflektierten Strahlung erfaßt,
aus dem Ansteigen der empfangenen Intensität die Position bestimmt wird, in der das Dosierelement an der Walze ansteht,
das vom Stellungsgeber in dieser Position abgegebene Signal abgespeichert und als Null-Stellungswert des Dosierelements für künftige Dosiervorgänge verwendet wird.

2. Verfahren nach Anspruch 1,
**dadurch gekennzeichnet,**

daß das auf die Oberfläche der Walze gerichtete Licht polarisiert wird.

3. Verfahren nach Anspruch 1 oder 2,
**dadurch gekennzeichnet,**

daß das von der Oberfläche der Walze reflektierte Licht polarisiert wird.

4. Vorrichtung zur Durchführung des Verfahrens nach einem der Ansprüche 1-3, mit einer drehbaren metallischen Walze (1), wenigstens einem mit der drehbaren Walze (1) zusammenwirkenden verfahrbaren Dosierelement, durch welches auf der Oberfläche eine Farb- oder Lackschicht (2) erzeugbar ist, wobei das Dosierelement einen Stellungsgeber aufweist, dessen Signal jeweils die Stellung des Dosierelementes bzgl. der Oberfläche der Walze (1) und somit die eingestellte Schichtdicke entnehmbar ist,
**dadurch gekennzeichnet,**

daß zur Bestimmung der Stellung, in welcher das Dosierelement ganz an der Walze (1) anliegt, eine Meßvorrichtung (3, 4, 5, 6) vorgesehen ist, durch welche die Schicht (2) auf der Walze (1) mit Licht bestrahlbar und das von der Schicht (2) reflektierte Licht erfaßbar ist, bei der der Strahlengang zur Beleuchtung der Oberfläche sowie der Strahlengang zur Erfassung des von der Oberfläche reflektierten Lichtes jeweils im Brewster-Winkel (β) gegenüber der Flächennormalen (7) verlaufen, wobei der Brewster-Winkel (β) durch den Brechungsindex (n) des Materials der Farb- bzw. Lackschicht (2) definiert ist, daß wenigstens in einem der Strahlengänge zur Beleuchtung der Oberfläche bzw. zum Empfang des von der Oberfläche reflektierten Lichtes eine Einrichtung (5, 6) zur zumindest teilweisen Polarisation des Lichtes in der Einfallsebene angeordnet ist. und daß der Meßvorrichtung (3,4,5,6) eine Auswerteschaltung (R', R'') nachgeschaltet ist, durch welche während des Verfahrens des Dosierelements in Richtung Walze (1) die Intensität der reflektierten Strahlung erfaßbar, aus einem Ansteigen der empfangenen Intensität diejenige Position bestimmbar ist, in der das Dosierelement an der Walze (1) anliegt, so daß das vom Stellungsgeber in dieser Position abgegebene Signal abspeicherbar und als Null-Stellungswert des Dosierelements für künftige Dosiervorgänge verwendbar ist.

5. Vorrichtung nach Anspruch 4, **dadurch gekennzeichnet,**

daß dem Lichtsender (3) ein Polarisationsfilter (5) nachgeordnet ist.

6. Vorrichtung nach Anspruch 4 oder 5, **dadurch gekennzeichnet,**

daß dem Lichtempfänger (4) ein Polarisationsfilter (6) vorgeordnet ist.

**Claims**

1. Process for adjusting a metering element with respect to a rotating roller of a printing press, wherein by means of the metering element on the metallic roller, a layer of ink, varnish or the like is generated and the metering element has a position sensor, from the signal of which, in each case, the position of the metering element with reference to the surface of the roller and accordingly the layer thickness adjusted can be extracted, characterised in that in order to determine the position in which the metering element lies wholly against the roller, the layer on the roller is illuminated with light and the light reflected from the layer sensed and the intensity of the reflected light is determined, wherein the irradiation of the surface or the layer located thereon as well as the reception of the light reflected from the surface or the layer located thereon takes place at the Brewster angle with respect to the normal to the surface, wherein the Brewster angle is defined by the refractive index of the material of the layer to be determined, at least in one or both of the beam paths and at least partially linear polarisation of the light in the incident plane takes place, during the movement of the metering element in the direction towards the roller the intensity of the reflected radiation is sensed, from the increase of the received intensity, the position is determined at which the metering element lies against the roller, the signal emitted by the position sensor in this position is stored and is used as a zero position value of the metering element for future metering processes.

2. Process according to Claim 1, characterised in that the light directed on to the surface of the roller is polarised.

3. Process according to Claim 1 or 2, characterised in that the light reflected from the surface of the roller is polarised.

4. Device for carrying out the process according to one of Claims 1-3, with a rotatable metallic roller (1), at least one movable metering element cooperating with the rotatable roller (1), by means of which an ink or varnish layer (2) can be generated on the surface, wherein the metering element has a position sensor, from the signal of which can be extracted in each case the position of the metering element with reference to the surface of the roller (1) and thereby the layer thickness adjusted, characterised in that for determining the position in which the metering element lies wholly against the roller (1), a measuring device (3,4,5,6) is provided by which the layer (2) on the roller (1) can be irradiated with light and the light reflected from the layer (2) can be sensed, in which the beam path for illuminating the surface as well as the beam path for sensing the light reflected from the surface run in each case at the Brewster angle (β) with respect to the normal to the surface (7), wherein the Brewster angle (β) is defined by the refractive index (n) of the material of the ink or varnish layer (2), that at least in one of the beam paths for illuminating the surface or for receipt of the light reflected from the surface, a unit (5,6) is arranged for at least partial polarisation of the light in the incident plane, and that connected downstream of the measuring device (3,4,5,6) is an evaluation circuit (R',R") by means of which during the movement of the metering element in the direction towards the roller (1), the intensity of the reflected radiation can be detected, from an increase in the intensity received, that the position can be calculated in which the metering element lies against the roller (1) so that the signal emitted from the position sensor in this position can be stored and is usable as a zero position value of the metering element for future metering processes.

5. Device according to Claim 4, characterised in that a polarisation filter (5) is arranged downstream of the light emitter (3).

6. Device according to Claim 4 or 5, characterised in that a polarisation filter (6) is arranged upstream of the light receiver (4).

## Revendications

1. Procédé pour régler un élément de dosage par rapport à un cylindre rotatif d'une machine d'impression, une couche d'encre, de vernis ou analogue étant engendrée au moyen de l'élément de dosage sur le cylindre métallique, et l'élément de dosage présentant un capteur de position, à partir du signal duquel, à chaque fois, la position de l'élément de dosage ou de la surface du cylindre et, ainsi, l'épaisseur réglée de la couche peuvent être déduites,
caractérisé en ce que, pour déterminer la position dans laquelle l'élément de dosage est complètement appliqué contre le cylindre, la couche sur le cylindre est exposée à de la lumière et la lumière réfléchie par la couche est détectée, et l'intensité de la lumière réfléchie est déterminée, l'exposition à la lumière de la surface ou de la couche se trouvant sur celle-ci, ainsi que la réception de la lumière réfléchie par la surface ou la couche se trouvant sur celle-ci ayant lieu sous l'angle d'incidence brewstérienne par rapport à la normale à la surface, l'angle d'incidence brewstérienne étant défini par l'indice de réfraction de la matière de la couche à déterminer, une polarisation linéaire au moins partielle de la lumière dans le plan d'incidence ayant lieu au moins dans un des deux trajets du rayonnement, pendant le déplacement de l'élément de dosage en direction du cylindre, l'intensité du rayonnement réfléchi est détectée, à partir de l'augmentation de l'intensité reçue, il est déterminé la position dans laquelle l'élément de dosage se trouve contre le cylindre, le signal fourni par le capteur de position dans cette position est mémorisé et est utilisé comme valeur de position de référence de l'élément de dosage pour des processus de dosage futurs.

2. Procédé selon la revendication 1,
caractérisé en ce que la lumière dirigée sur la surface du cylindre est polarisée.

3. Procédé selon la revendication 1 ou 2,
caractérisé en ce que la lumière réfléchie par la surface du cylindre est polarisée.

4. Dispositif pour la mise en oeuvre du procédé selon une des revendications 1 à 3, comportant un cylindre métallique rotatif (1), au moins un élément de dosage déplaçable, coopérant avec le cylindre rotatif (1), grâce auquel une couche d'encre ou de vernis (2) peut être engendrée sur la surface, l'élément de dosage présentant un capteur de position, à partir du signal duquel, à chaque fois, la position de l'élément de dosage ou de la surface du cylindre (1) et, ainsi, l'épaisseur de couche réglée peuvent être déduites,
caractérisé en ce que, pour déterminer la position dans laquelle l'élément de dosage est complètement appliqué contre le cylindre (1), il est prévu un dispositif de mesure (3, 4, 5, 6), grâce auquel la couche (2) sur le cylindre (1) peut être exposée à de la lumière et la lumière réfléchie par la couche (2) peut être détectée, le trajet du rayonnement pour éclairer la surface ainsi que le trajet du rayonnement pour détecter la lumière réfléchie par la surface s'étendant, à chaque fois, sous un angle d'incidence brewstérienne (β) par rapport à la normale à la surface (7), l'angle d'incidence brewstérienne (β) étant défini par l'indice de réfraction (n) de la matière de la couche d'encre ou de vernis (2), en ce que, au moins dans un des trajets du rayonnement pour éclairer la surface ou pour recevoir la lumière réfléchie par la surface, il est agencé un dispositif (5, 6) pour polariser au moins partiellement la lumière dans le plan d'incidence, et en ce que le dispositif de mesure (3, 4, 5, 6) est disposé en amont d'un circuit d'exploitation (R', R") grâce auquel, pendant le déplacement de l'élément de dosage en direction du cylindre (1), l'intensité du rayonnement réfléchi peut être détectée, et, à partir d'une augmentation de l'intensité reçue, il peut être déterminé la position dans laquelle l'élément de dosage est appliqué contre le cylindre (1), de sorte que le signal fourni par le capteur de position dans cette position peut être mémorisé et être utilisé comme valeur de position de référence de l'élément de dosage pour des processus de dosage futurs.

5. Dispositif selon la revendication 4,
caractérisé en ce qu'un filtre de polarisation (5) est disposé en aval de l'émetteur de lumière (3).

**EP 0 768 178 B1**

6. Dispositif selon la revendication 4 ou 5, caractérisé en ce qu'un filtre de polarisation (6) est prévu en amont du récepteur de lumière (4).

Fig. 1

Fig. 2

<u>Fig. 3</u>

<u>Fig. 4</u>